# FASCICULE DE BREVET EUROPEEN

(11) **EP 2 794 284 B1**
(45) Date de publication et mention de la délivrance du brevet: **21.09.2016**
(21) Numéro de dépôt: 12823035.6
(22) Date de dépôt: 20.12.2012
(51) Int. Cl.: B42D 15/00, D21H 19/38, D21H 21/42, D21H 21/48, G07D 7/12, B32B 33/00

(54) **STRUCTURE MULTICOUCHE COMPORTANT AU MOINS UNE COUCHE DIFFUSANTE ET PROCÉDÉ DE FABRICATION ASSOCIÉ**
MEHRSCHICHTIGE STRUKTUR MIT MINDESTENS EINER DIFFUSIONSSCHICHT UND HERSTELLUNGSVERFAHREN DAFÜR
MULTILAYER STRUCTURE COMPRISING AT LEAST ONE DIFFUSING LAYER AND METHOD FOR MANUFACTURING SAME

(30) Priorité: 22.12.2011 FR 1162329
(43) Date de publication de la demande: 29.10.2014
(73) Titulaire: Arjowiggins Security, 92100 Boulogne Billancourt (FR)
(72) Inventeur: SARRAZIN, Pierre, F-38620 Saint Geoire en Valdaine (FR); DOUBLET, Pierre, F-77160 Saint Brice (FR)
(74) Mandataire: Nony
(86) Numéro de dépôt international: PCT/IB2012/057553
(87) Numéro de publication internationale: WO 2013/093848

(56) Documents cités:
- WO-A2-2007/079453
- WO-A2-2009/053622
- FR-A1- 2 935 995
- US-A1- 2008 251 222
- US-A1- 2010 108 874
- US-A1- 2011 147 614

## Description

La présente invention concerne les articles de sécurité, notamment les documents de sécurité, et plus particulièrement ceux intégrant des structures multicouches comportant des filigranes ou pseudo-filigranes.

Par « document de sécurité », on désigne un moyen de paiement, tel qu'un billet de banque, un chèque ou un ticket restaurant, un document d'identité, tel qu'une carte d'identité, un visa, un passeport ou un permis de conduire, un ticket de loterie, un titre de transport ou encore un ticket d'entrée à des manifestations culturelles ou sportives.

WO 2007/071939 divulgue une structure multicouche dans laquelle une couche fibreuse comportant au moins une ouverture est superposée à un substrat fibreux qui la recouvre, de telle sorte que le contour de l'ouverture apparaisse distinctement en lumière transmise mais indistinctement en lumière réfléchie.

WO 2006/095033 A1 décrit un document de sécurité incorporant une bande fibreuse.

WO 2007/071937 A2 décrit un procédé de fabrication dans lequel une bande fibreuse munie d'au moins un élément de sécurité est incorporée dans un substrat fibreux.

La publication WO 2009/136060 A2 décrit une feuille comportant un substrat fibreux et au moins un ruban définissant au moins une zone d'opacité réduite.

La demande WO 2008/043965 A2 divulgue une feuille comportant un ruban fibreux, enduit d'un adhésif.

La demande WO 2009/053622 A2 décrit l'obtention d'un effet dit « Dual Watermark » à l'aide d'une structure comportant une couche diffusante placée entre deux jets de papier comportant chacun un filigrane. La couche diffusante ne permet l'observation de chaque filigrane que d'une face de la structure. Le caractère diffusant de la couche diffusante provient par exemple d'irrégularités de surface ou de l'emploi d'un film de complexage translucide en polyéthylène.

La demande US 2008/0251222 A1 décrit un document de sécurité comportant une couche diffusante incorporant des particules monodisperses.

Les filigranes, notamment ceux d'un papier billet de banque, sont classiquement obtenus par égouttage d'une suspension fibreuse sur une toile d'égouttage façonnée spécifiquement pour permettre la création d'un motif. Ce dernier, visible en lumière transmise, est obtenu par contraste entre les zones dites « claires » et les zones dites « foncées ».

Un filigrane constitue une sécurité dite de niveau 1, majoritairement utilisée pour les billets de banque en papier, car introduit dans la masse de substrat lors de la formation du papier, et donc très difficile à contrefaire.

L'invention vise à conférer à une structure comportant un filigrane ou pseudo-filigrane des propriétés optiques prédéfinies, notamment lorsque celle-ci est observée en lumière transmise.

L'invention cherche à perfectionner encore les structures multicouches comportant au moins un filigrane ou pseudo-filigrane et une couche diffusante au moins partiellement superposée au filigrane.

L'invention a ainsi pour objet, selon un premier de ses aspects, une structure multicouche comportant :
- au moins un filigrane ou pseudo filigrane,
- au moins une couche diffusante au moins partiellement superposée au filigrane, la couche diffusante comportant une matrice polymérique ayant un indice de réfraction n_{matrice}, et des particules diffusantes liées par la matrice, d'indice de réfraction n_{particules} différent de celui de la matrice, avec un écart |n_{matrice} - n_{particules}| supérieur ou égal à 0,01 et de préférence supérieur ou égal à 0,03.

Une différence croissante entre les indices de réfraction des particules et de la matrice conduit à augmenter l'angle de réfraction à l'interface entre les particules et la matrice polymérique, ce qui résulte en une diffusion plus large de la lumière, favorable à l'effet « Dual watermark ».

Grâce au choix, selon l'invention, de particules diffusantes telles que la différence d'indice de réfraction avec la matrice soit supérieure ou égale en valeur absolue à 0,01, mieux 0,03, encore mieux 0,10, la couche diffusante présente un pouvoir diffusant élevé et peut être réalisée avec une épaisseur relativement faible, ce qui facilite son introduction dans des structures multicouches telles que par exemple des billets de banques ou autres documents de sécurité tels qu'une carte d'identité, un passeport, un bon d'achat, un chèque, un voucher, une carte de crédit, un ticket d'accès à des manifestations culturelles ou sportives, ou un certificat d'authenticité.

Par « indice de réfraction », on désigne l'indice de réfraction tel qu'il peut être mesuré avec un réfractomètre à la longueur d'onde de 589,29 nm à 20°C correspondant à la raie D du sodium.

Les particules diffusantes peuvent présenter des propriétés de biréfringence ou non. En présence de particules ayant des propriétés de biréfringence, ces particules présentent deux indices de réfraction, et l'on considère que l'un au moins d'entre eux, et mieux les deux, vérifient la relation donnée plus haut, à savoir une différence en valeur absolue d'indice avec la matrice polymérique supérieure ou égale à 0,01, de préférence 0,03, mieux 0,1.

L'indice de polydispersité des particules diffusantes est compris entre 0,08 et 0,7 pour une analyse granulométrique selon la norme ISO 13321 : 1996. Une large répartition granulométrique de particules permet une amélioration de l'effet diffusant de l'ensemble du fait que les particules les plus grosses diffusent les rayons lumineux et les plus petits les diffractent.

Les particules diffusantes peuvent comporter, voire être constituées par, un matériau biréfringent, notamment de biréfringence uniaxiale.

Par « indice de réfraction de la matrice », on désigne l'indice de réfraction tel que mesuré par un réfractomètre dans les conditions précitées. De nombreux matériaux ont leur indice de réfraction donné dans la littérature.

La matrice polymérique est de préférence transparente, afin de faciliter la diffusion de la lumière des éléments diffusants.

De préférence, n_{particules} ≤ 3,00 et 0,03 ≤ |n_{matrice} - n_{particules}| ≤ 1,00. L'écart |n_{matrice} - n_{particules}| peut être inférieur ou égal à 3. On peut avoir n_{particules} ≤ 4,5.

La couche diffusante peut être disposée entre deux couches de papier, par exemple de grammage compris entre 20 et 80 g/m² dont l'une au moins et mieux les deux comportent un filigrane ou pseudo-filigrane, étant directement à leur contact ou non ; en particulier, une couche transparente, par exemple d'un film thermoplastique ou d'une matrice transparente, est avantageusement interposée entre la couche diffusante et l'une au moins des couches de papier. La présence d'une couche transparente entre la couche de papier et la couche diffusante peut faciliter l'obtention d'une diffusion homogène de la lumière. Cette couche transparente peut être déposée par surfaçage, et son épaisseur est par exemple comprise entre 5 et 25. Il s'agit par exemple d'un polymère acrylique.

La matrice polymérique peut être thermoplastique ; dans ce cas, elle peut être extrudée après mélange avec les particules diffusantes.

La matrice polymérique peut être une matrice poreuse comportant des bulles de gaz d'un diamètre inférieur ou égal à 30 µm. Les particules diffusantes se placent notamment dans la partie polymère de la matrice poreuse ne comportant pas les bulles de gaz. Le gaz a de préférence un indice de réfraction n_{gaz} différent de celui de la matrice polymérique et/ou des particules diffusantes, avec des écarts |n_{gaz}-n_{particules}| et/ou |n_{gaz} - n_{matrice}| supérieurs ou égaux à 0,01 et de préférence supérieurs ou égaux à 0,03. Les bulles de gaz accentuent l'effet diffusant de la couche diffusante.

La matrice polymérique peut servir d'adhésif pour lier entre elles deux couches de la structure sans utiliser une ou plusieurs autres couches adhésives. Cela peut être le cas par exemple lorsque la matrice lie entre elles deux jets de papier, dont l'un au moins et par exemple les deux portent un filigrane.

La structure peut aussi comporter, en plus de la matrice, une ou plusieurs couches adhésives, lesquelles peuvent ou non présenter un caractère diffusant de la lumière en raison de la présence de charges, notamment de même nature que les particules diffusantes dispersées dans la matrice, ces particules étant par exemple minérales.

La structure peut ainsi comporter au moins une couche adhésive comportant un adhésif thermoscellable, adjacente à la matrice. Cette couche adhésive peut notamment contribuer à maintenir la matrice assemblée à une couche adjacente, notamment fibreuse. Comme adhésifs, on peut utiliser des adhésifs thermoscellables sans pression, notamment acryliques, en particulier vinylacétate, éthylène ou polyuréthane.

La structure peut comporter une couche de support, de préférence transparente, notamment en bande, comportant un matériau thermoplastique, adjacente à la matrice. L'épaisseur de la couche de support est de préférence inférieure ou égale à 25 microns. L'épaisseur cumulée de la couche de support et de la couche diffusante est de préférence inférieure ou égale à 50 microns.

La structure peut également comporter une couche adhésive comportant un adhésif thermoscellable, disposée sur la couche de support, du côté opposé à la matrice.

La couche de support peut apporter de la stabilité sur le plan mécanique, faciliter l'introduction en machine à papier et accroître l'effet diffusant. La couche de support est de préférence une couche homogène en surface, notamment lisse, et d'épaisseur constante, qui permet d'appliquer la couche diffusante également de manière homogène, de sorte à obtenir un effet diffusant homogène sur toute la surface et particulièrement au niveau de la zone du filigrane.

La couche de support peut elle-même être constituée d'un matériau thermoscellant. Dans ce cas, il n'est pas nécessaire de prévoir une couche adhésive additionnelle comportant un adhésif thermoscellable.

Pour obtenir un effet diffusant de grande homogénéité, il est préférable de ne pas appliquer la couche diffusante directement sur la couche fibreuse filigranée. Dans ce cas, la présence de la couche de support évite un contact direct de la couche diffusante et du papier. En variante, en l'absence de couche support et lorsqu'une grande homogénéité de la diffusion est recherchée, le papier est couché, sur sa surface tournée vers la couche diffusante, avec une matrice transparente, sur laquelle est déposée la couche diffusante.

Ainsi, selon un aspect de l'invention, il est avantageux que la couche diffusante ne soit pas directement en contact avec une couche de papier, notamment celle portant le filigrane avec lequel la couche diffusante se superpose au moins partiellement.

Lorsque présente, la couche de support présente de préférence un indice de réfraction différent de l'indice de réfraction moyen de la couche diffusante, avec une différence en valeur absolue supérieure à 0,01, mieux 0,03, encore mieux 0,1, ce qui contribue à améliorer l'effet diffusant global de la structure. L'indice de réfraction moyen de la couche diffusante est pris égal à 1,71 mesuré avec un réfractomètre à la longueur d'onde de 589,29 nm à 20°C correspondant à la raie D du sodium. En cas de présence d'une matrice polymérique transparente entre la couche diffusante et la couche de papier, comme mentionné ci-dessus, l'indice de réfraction de la matrice polymérique transparente est de préférence différent de celui de la matrice de la couche diffusante, avec de préférence une différence d'indices de réfraction, an valeur absolue, supérieure ou égale à 0,01, mieux 0,03, encore mieux 0,1.

La matrice peut comporter un polymère thermoplastique et la structure comporter au moins une couche adhésive d'un adhésif thermoscellable appliqué sur la matrice, de part et d'autre de la matrice. De préférence, l'indice de réfraction de la couche adhésive est de préférence différent de celui de la matrice de la couche diffusante, avec de préférence une différence d'indices de réfraction, en valeur absolue, supérieure ou égale à 0,01, mieux 0,03, encore mieux 0,1.

Le filigrane ou pseudo-filigrane peut être formé dans une couche de papier au contact de la couche adhésive, lorsque celle-ci est présente.

Lorsque la structure comporte plusieurs couches de papier, celles-ci peuvent être de couleurs différentes.

La ou les couches de papier de la structure selon l'invention peuvent être de faible grammage, notamment inférieur ou égal à 80 g/m², de préférence compris entre 20 et 80 g/m² et d'épaisseur comprise entre 20 et 80 µm.

La structure peut comporter deux jets de papier entre lesquels s'étend la couche diffusante, l'un au moins des jets de papier comportant un filigrane, l'autre comportant un renfoncement permettant d'accueillir au moins partiellement la couche diffusante, laquelle s'étend par exemple en forme de bande entre les deux jets de papier. Le renfoncement peut être formé par l'introduction de la bande lors de la formation du jet.

La couche diffusante peut encore s'étendre, par exemple en bande, entre deux jets de papier, dont l'un au moins est filigrané, formant ainsi une sous-structure, et cette dernière peut elle-même être disposée entre deux jets de papier présentant des zones amincies au droit de la sous-structure. Les zones amincies peuvent notamment être formées par l'introduction de la bande lors de la formation du jet.

Ainsi, dans un exemple de mise en oeuvre de l'invention, la couche diffusante est disposée entre deux couches de papier, dont l'une au moins comporte un filigrane, mieux chacune comporte un filigrane, la couche diffusante étant de préférence au contact d'un support, notamment un film de matière thermoplastique, notamment de PET, de préférence transparent, la couche de papier opposée à celle portant le filigrane étant de préférence munie d'un renfoncement ou d'un évidement, ce renfoncement ou cet évidement recevant au moins partiellement le support et/ou la couche diffusante. Le renfoncement ou l'évidemment peut être formé par l'introduction de la bande lors de la formation la couche papier. Alternativement, l'évidemment peut être formé en modifiant le dépôt de matière fibreuse, par exemple par masquage ou bouchage, sur la surface de formation de la couche de papier préalablement au mariage humide des deux couches de papier.

Dans un autre exemple de mise en oeuvre de l'invention, la couche diffusante est disposée entre deux couches externes de papier, notamment deux couches de papier non filigranées, la couche diffusante appartenant à une sous-structure comportant deux couches fibreuses filigranées, l'une au moins de ces couches fibreuses étant de préférence enduite d'une matrice transparente permettant d'homogénéiser la surface du papier, la couche diffusante étant disposée au contact de cette matrice transparente, les couches externes présentant de préférence au moins une zone amincie accueillant au moins partiellement la sous-structure, mieux chacune comporte une telle zone amincie. Les zones amincies peuvent notamment être formées par l'introduction de la bande lors de la formation des couches fibreuses.

La structure peut comporter une couche de support, de préférence transparente, adjacente à la couche diffusante, la couche de support étant de préférence d'épaisseur comprise entre 10 et 15 microns.

L'invention a encore pour objet un procédé de fabrication, notamment en ligne, d'une structure multicouche selon l'invention, dans lequel :
un premier jet de papier est réalisé, notamment avec une machine à forme ronde, étant porteur d'un filigrane, un deuxième jet de papier est fabriqué, notamment avec un cylindre dit « short former », de façon à présenter de préférence un renfoncement, une sous-structure diffusante, en bande, est insérée entre les deux jets, de façon à se superposer avec le renfoncement et le filigrane, puis les jets sont assemblés en phase humide, la sous-structure diffusante étant de préférence composée d'une couche de support d'une matière thermoplastique, notamment du PET, revêtue de la couche diffusante, la sous-structure étant de préférence introduite en ligne entre les deux jets de papier.

L'invention a encore pour objet un procédé de fabrication, notamment en ligne, d'une structure multicouche selon l'invention, dans lequel : un premier jet de papier est réalisé, notamment avec une machine à forme ronde, étant porteur d'un filigrane, un deuxième jet de papier est réalisé avec un évidement, de préférence traversant, qui accueille une sous-structure diffusante en bande, puis les jets et sont assemblés en phase humide, la sous-structure diffusante étant de préférence composée d'une couche de support d'une matière thermoplastique, notamment du PET, revêtue de la couche diffusante, la sous-structure étant de préférence introduite en ligne entre les deux jets de papier.

L'invention a encore pour objet un procédé de fabrication d'une structure multicouche selon l'invention, dans lequel : on introduit entre deux jets de papier, qui peuvent être non filigranés, une sous-structure en bande, filigranée, le premier jet étant réalisé, de préférence sur une forme ronde et le deuxième étant réalisé, de préférence sur un cylindre « short former », la sous-structure se logeant entre des zones amincies formées dans les premier et deuxième jets (15a, 15b) notamment par l'introduction de ladite sous-structure, la sous-structure comportant de préférence deux jets de papier filigranés et la couche diffusante, laquelle est de préférence surfacée sur l'un des jets, sur la face de ce jet en regard de l'autre jet, et contrecollée sur l'autre jet, et dans lequel également, de préférence, avant de déposer la couche diffusante sur le jet filigrané, on dépose, notamment par surfaçage, sur ce jet filigrané une couche de matrice transparente, notamment acrylique et de préférence entre 5 et 25 microns d'épaisseur, par exemple d'environ 10 microns d'épaisseur, pour homogénéiser la surface du papier, la couche diffusante étant déposée sur cette couche transparente, les épaisseurs des deux jets filigranés étant de préférence comprises entre 20 et 80 microns, par exemple d'environ 30 microns et l'épaisseur de la couche diffusante étant de préférence comprise entre 10 et 20 microns, les jets fibreux entre lesquels la sous-structure est introduite étant de préférence d'épaisseur inférieure à 20 microns, notamment d'environ 10 microns d'épaisseur, dans les zones amincies où ils se superposent à la sous-structure.

L'invention a encore pour objet un procédé de fabrication d'une structure multicouche selon l'invention, dans lequel : on introduit entre deux jets de papier, qui peuvent être non filigranés, une sous-structure en bande, filigranée, le premier jet étant réalisé, de préférence sur une forme ronde le deuxième étant réalisé, de préférence sur un cylindre « short former », la sous-structure se logeant entre des zones amincies formées dans les premier et deuxième jets (15a, 15b) notamment par l'introduction de ladite sous-structure, la sous-structure comportant un support en matière thermoplastique, notamment du PET, de préférence d'épaisseur inférieure ou égale à 25 microns, recouvert sur une face de la couche diffusante et accolé par l'autre face à un jet de papier filigrané , de préférence de 20 à 80 microns, notamment 30 microns environ d'épaisseur, ou la sous-stucture comportant un jet de papier filigrané recouvert sur une face d'une matrice transparente déposée par surfaçage et la couche diffusante étant déposée sur cette matrice transparente

L'invention a encore pour objet un article de sécurité comportant une structure multicouche selon l'invention. Cet article peut constituer un document de sécurité, notamment un billet de banque.

Au sein de l'article, la structure multicouche peut s'étendre en bande, d'un bord à l'autre de l'article, la bande ayant une largeur inférieure à celle de l'article. La bande peut être incorporée en phase humide dans le document, en utilisant par exemple les techniques décrites dans WO 2007/071937 A2 ou WO 2008/43965 A2.

Lorsque l'article est un document, celui-ci peut comporter un filigrane ou pseudo-filigrane non superposé à ladite bande et visible en lumière transmise à la fois du côté recto et verso.

La ou les couches de papier de la structure selon l'invention peuvent être d'une couleur différente de celle du substrat fibreux dans lequel la structure est introduite.

Le document, ou la structure de sécurité qu'il comporte, peu(ven)t comporter un ou plusieurs éléments de sécurité supplémentaires tels que définis ci-après.

Parmi les éléments de sécurité supplémentaires, certains sont détectables à l'oeil nu, en lumière du jour ou en lumière artificielle, sans utilisation d'un appareil particulier.

Ces éléments de sécurité comportent par exemple des fibres ou planchettes colorées, des fils imprimés ou métallisés totalement ou partiellement. Ces éléments de sécurité sont dits de premier niveau.

D'autres types d'éléments de sécurité supplémentaires sont détectables seulement à l'aide d'un appareil relativement simple, tel qu'une lampe émettant dans l'ultraviolet (UV) ou l'infrarouge (IR). Ces éléments de sécurité comportent par exemple des fibres, des planchettes, des bandes, des fils ou des particules. Ces éléments de sécurité peuvent être visibles à l'oeil nu ou non, étant par exemple luminescents sous un éclairage d'une lampe Wood émettant à une longueur d'onde de 365 nm. Ces éléments de sécurité sont dits de deuxième niveau.

D'autres types d'éléments de sécurité supplémentaires nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieure. La détection automatique du signal permet d'authentifier, le cas échéant, le document. Ces éléments de sécurité comportent par exemple des traceurs se présentant sous la forme de matières actives, de particules ou de fibres, capables de générer un signal spécifique lorsque ces traceurs sont soumis à une excitation optronique, électrique, magnétique ou électromagnétique. Ces éléments de sécurité supplémentaires présents au sein du document, ou de la structure de sécurité qu'il comporte, peuvent présenter des caractéristiques de sécurité de premier, de deuxième ou de troisième niveau.

L'invention a encore pour objet un procédé d'authentification d'un document comportant une structure selon l'invention, le procédé comportant les étapes consistant à :
- observer successivement les deux faces du document en lumière transmise,
- générer au vu de cette observation une information concernant l'authenticité du document.

L'observation peut notamment viser à déterminer si l'effet « Dual Watermark » est présent.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de façon schématique, en coupe, un exemple de sous-structure comportant une couche diffusante selon l'invention,
- les figures 2 et 3 représentent des exemples de structures multicouches selon l'invention,
- les figures 4A et 4B sont des vues, respectivement côté recto et côté verso, d'un document comportant une structure multicouche selon l'invention, observé en lumière transmise,
- la figure 5 est une vue analogue aux figures 1 à 3 d'une structure multicouche selon une variante de mise en oeuvre de l'invention,
- les figures 6A et 6B sont des vues analogues aux figures 4A et 4B d'un autre exemple de document intégrant la structure multicouche illustrée à la figure 5,
- la figure 7 est une coupe observée au microscope électronique d'un exemple de structure multicouche selon l'invention,
- les figures 8A et 8B représentent des exemples de structures de particules diffusantes, et
- les figures 9A à 9D illustrent, en coupe, différentes structures selon l'invention.

Sur le dessin, les proportions respectives réelles des différents éléments constitutifs n'ont pas toujours été respectées, dans un souci de clarté.

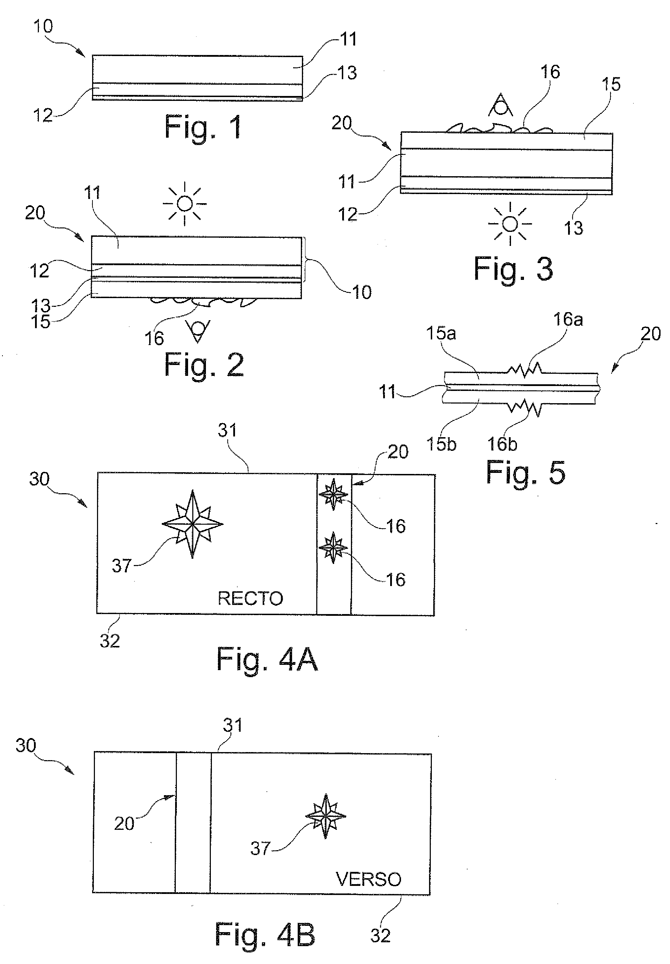

On a représenté à la figure 1 une sous-structure 10 destinée à la réalisation d'une structure multicouche 20 selon l'invention, telle que par exemple l'une de celles illustrées aux figures 2 et 3.

La sous-structure 10 comporte une couche diffusante 11, une couche adhésive 13 et une couche de support 12 entre les deux. La couche de support 12 permet par exemple une manipulation de la sous-structure en forme de bande, et peut comporter un matériau tel qu'un polyester, notamment un PET. Alternativement une couche de support en PC (Polycarbonate) peut convenir. La couche de support 12 peut également contribuer à la diffusion de la lumière lorsque son indice de réfraction est choisi en conséquence.

La couche diffusante 11 comporte, conformément à l'invention, une matrice polymérique et des particules diffusantes dispersées dans la matrice, d'indice(s) de réfraction différent(s) de la matrice, avec un écart an valeur absolue supérieur à 0,01, mieux 0,03, encore mieux 0,1, conformément à l'invention.

La sous-structure 10 peut être assemblée avec une couche fibreuse 15 comportant un filigrane 16, grâce à la couche adhésive 13, comme illustré à la figure 2.

La couche fibreuse 15 est de préférence de bas grammage, compris entre 20 et 50 g/m², selon la norme NF EN ISO 536 et d'épaisseur comprise de préférence entre 20 et 50 µm.

Le filigrane 16 peut être de tout type, comme détaillé par la suite, et peut éventuellement être remplacé par un pseudo-filigrane.

Les propriétés optiques de la couche diffusante 11 sont telles que le filigrane 16 n'est clairement observable en lumière transmise que du côté de la couche fibreuse 15 qui le porte; de l'autre côté, les variations d'opacité liées au filigrane et les variations de luminosité qui en résultent sont atténuées par diffusion de la lumière à la traversée de la couche diffusante, au point de ne pas permettre à l'observateur de percevoir le contraste du filigrane.

En observation par transmission, avec le substrat placé entre l'observateur et la source lumineuse, sous lumière naturelle ou artificielle, l'observateur situé du côté du filigrane peut observer celui-ci. Lorsque l'observateur est placé de l'autre côté, il ne peut pas observer le filigrane en lumière transmise.

La structure 20 selon l'invention est avantageusement incorporée à un document de sécurité 30, par exemple sous la forme d'une bande, comme illustré aux figures 4A et 4B.

Sur ces figures, on voit que la structure 20 porte des filigranes 16 sous la forme d'étoiles, qui ne sont visibles en lumière transmise que de la face recto. Le document 30 peut comporter un filigrane 31 qui est non superposé à la structure 20 et qui est visible des faces recto et verso.

La structure 20 s'étend, dans le cas d'une incorporation en bande, d'un bord 31 à l'autre 32 du document. Dans une variante non illustrée, la structure 20 est incorporée sous la forme d'un patch.

La bande est introduite de préférence en phase humide.

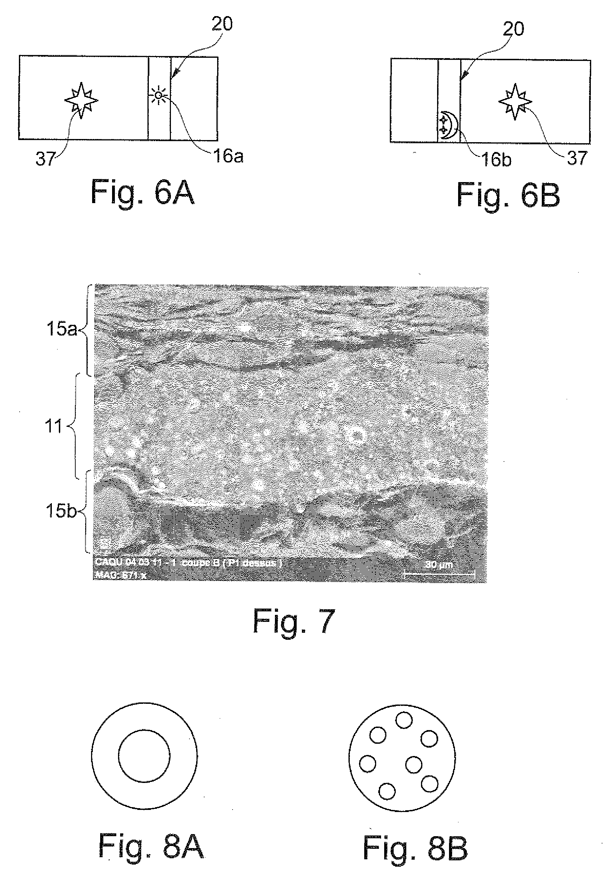

Lorsque la bande est introduite dans un papier, celui-ci peut lui-même porter un autre filigrane, comme illustré aux figures 4A et 4B ou 6A et 6B. On peut obtenir un document sécurisé porteur de trois types de filigranes différents, correspondant par exemple à trois couleurs de jets unitaires différentes. Les filigranes sont visibles par paires seulement, respectivement au recto et au verso.

Sur la figure 5, on a illustré la possibilité pour la structure 20 de comporter des couches fibreuses filigranées 15a et 15b de part et d'autre de la couche diffusante 12, celle-ci liant entre elles les couches fibreuses 15a et 15b. Les filigranes 16a et 16b des couches 15a et 15b peuvent se superposer ou non.

### Filigrane ou pseudo-filigrane

On entend par « filigrane ou pseudo-filigrane » selon l'invention, une image dessinée qui apparaît dans l'épaisseur de la couche fibreuse filigranée.

Le filigrane ou pseudo-filigrane peut être réalisé de différentes manières connues par l'homme du métier.

Le filigrane peut être un dessin gravé ou pressé dans une couche fibreuse lors de sa fabrication. Un tel filigrane peut par exemple se voir par transparence en créant des amincis ou des surcharges de pâtes au moment de la fabrication de la couche fibreuse sur une machine à papier à forme ronde grâce à une empreinte en relief ou en creux dans la toile de formation de la forme ronde.

Le filigrane peut encore provenir de zones où la couche fibreuse a été pressée sur une machine à papier à table plate grâce à un rouleau filigraneur qui comporte la gravure du filigrane en relief, ce qui a pour effet de presser fortement certaines zones de la couche fibreuse et de chasser l'eau contenue dans les fibres au moment de la formation de la couche fibreuse en partie humide.

Le pseudo-filigrane peut être produit dans une couche fibreuse finie par des moyens mécaniques et/ou chimiques par application de certains produits, ce dessin étant toujours visible en transparence.

Le pseudo-filigrane peut par exemple être réalisé en déposant ou en imprimant dans des zones déterminées de la couche fibreuse une composition qui modifie la transparence de la couche fibreuse, notamment afin de réaliser des zones claires et des zones sombres, semblables à celles d'un filigrane, sans toutefois obtenir un résultat permettant d'obtenir des finesses et des variantes de luminosité comparables à celles d'un filigrane classique.

On peut par exemple rendre plus transparente la couche fibreuse finie en appliquant dans des zones déterminées, par exemple une composition généralement grasse qui augmente la transparence de la couche fibreuse de façon permanente, comme par exemple une composition faite d'huile et de matériau minéral transparent comme décrit dans le brevet US 2 021 141 ou comme par exemple une composition sous forme d'une cire combinée à un solvant comme décrit dans le brevet US 1 479 337.

On peut aussi rendre transparente la couche fibreuse finie en appliquant localement une cire par transfert à chaud comme décrit dans le brevet US 5 118 526, une composition fluide, apte à accroître la transparence, polymérisable sous radiation comme décrit dans GB 1 489 084, ou une composition à base de polyéther, d'isocyanate aliphatique et d'alcool, appliquée par impression, comme décrit dans DE 3 920 378.

On peut encore utiliser une couche fibreuse comportant une matière thermofusible, comme par exemple du polyéthylène comme décrit dans le brevet EP 0 203 499, qui sous l'action locale de la chaleur verra sa transparence varier.

On peut opacifier la couche fibreuse finie, sans toutefois la rendre complètement opaque, en appliquant dans des zones déterminées un agent opacifiant qui augmente l'opacité de la couche fibreuse, comme par exemple décrit dans la demande de brevet FR 2 353 676. L'agent opacifiant peut par exemple être une suspension aqueuse d'un pigment ou d'une charge ou une solution d'un composé chimique, d'un composé coloré ou d'une teinture. Cet agent peut être appliqué pendant la fabrication de la couche fibreuse, sur la nappe fibreuse, et avant son enlèvement de la toile, de sorte que l'agent pénètre dans les interstices de la nappe et provoque une modification de l'opacité de la nappe à traiter dans des zones choisies, après séchage. Cette technique de fabrication a l'inconvénient de nécessiter des dispositifs spéciaux de rouleaux pour appliquer l'agent, et d'employer de préférence un dispositif d'aspiration pour faire pénétrer l'agent dans les interstices de la nappe.

On peut encore réaliser un pseudo-filigrane selon le procédé décrit dans le document W. WALENSKI, « Watermarks and Those that Are Not », Druckspiegel 52, n° 3 : 66-68 (March 1997). Ce document décrit un procédé de fabrication d'un pseudo-filigrane sur un papier non couché, comportant l'application sous chaleur et pression d'une pièce de marquage, représentant le motif du pseudo-filigrane, sur une feuille de papier remouillée.

On peut encore réaliser un pseudo-filigrane sur un papier non couché par application d'une solution de remouillage sur une ou plusieurs zones déterminées du papier sous chaleur et pression de manière à évaporer la solution et à densifier le papier dans la ou les zones déterminées.

La demande internationale WO 97/17493 décrit également la fabrication de papier couché comportant des pseudo-filigranes résultant d'une variation du poids de couche appliqué dans des zones déterminées, ce qui induit une variation d'épaisseur et d'opacité dans les zones où le poids de couche est réduit ou augmenté.

La demande internationale WO 1999/014433 décrit également un autre procédé de fabrication d'un pseudo-filigrane sur un papier couché, qui prévoit de réaliser une image dans le papier après l'étape de séchage qui suit la dernière opération de couchage, en effectuant les étapes dans lesquelles on applique une solution de remouillage sur au moins une face du papier couché, dans une ou plusieurs zones déterminées, et on applique une pression et une chaleur dans la ou les zones du papier couché de manière à évaporer la solution et densifier le papier couché dans la ou les zones par rapport au reste du papier.

Le pseudo-filigrane peut enfin être réalisé par voie mécanique en réalisant des marques par embossage mécanique de zones déterminées de la couche fibreuse comme décrit dans le brevet DE 3 718 452.

Le pseudo-filigrane peut encore être réalisé dans une couche polymère par application d'une composition susceptible de modifier sa transparence.

La demande WO 91/07285 décrit l'impression sur un support synthétique d'une composition modifiant l'opacité du support contenant au moins une charge minérale et au moins un liant ou un colorant soluble ou pigmentaire. La composition est appliquée dans des zones déterminées et le support est ensuite enduit sur toute sa surface avec une composition pigmentaire imprimable selon les procédés de couchage connus de l'homme du métier.

Le brevet US 4 307 899 décrit une carte d'authentification comportant une empreinte formée sur un support, de préférence plastique, par l'impression de couches colorées se superposant partiellement. Les zones imprimées avec une seule couche apparaissent en clair en lumière transmise et en sombre en lumière réfléchie, et les zones imprimées avec plusieurs couches superposées apparaissent en sombre en lumière transmise et en clair en lumière réfléchie, produisant ainsi un effet filigrané. Par modification du nombre de couches, il est possible d'obtenir des effets multitons.

Le pseudo-filigrane peut encore être réalisé dans une couche polymère par l'utilisation de moyens mécaniques.

On peut par exemple réaliser un pseudo-filigrane sur une feuille d'un matériau polymère en passant celle-ci entre deux rouleaux dont l'un porte un motif en creux ou en relief comme pour former une impression comme décrit dans EP 0 655 316. La feuille est ensuite orientée par étirage de façon à ce que sous lumière transmise, le motif apparaisse en noir et blanc correspondant aux zones marquées en relief ou en creux avec le rouleau.

La demande internationale WO 2007/016148 décrit encore une couche plastique qui peut être déformée, notamment estampée par gaufrage ou dégaufrage, pour former une image qui apparaît comme un filigrane, puis stratifiée sans que l'image formée ne soit endommagée.

Le pseudo-filigrane peut enfin être réalisé sur une couche polymère en utilisant des radiations électromagnétiques, comme par exemple un laser.

La demande EP 1 518 661 décrit par exemple un procédé pour réaliser un pseudo-filigrane sur une feuille polymère en bobine par irradiation électromagnétique de certaines zones et étirement de la feuille de façon à obtenir une feuille étirée présentant des zones transparentes correspondant aux zones irradiées.

Le filigrane peut être un filigrane haute définition, comme décrit dans la demande WO 2009/053622 A2.

Le ou les filigranes ou pseudo-filigranes présents au sein de la structure selon l'invention peuvent être réalisés selon l'une quelconque des méthodes décrites précédemment.

De préférence, on réalise des filigranes plutôt que des pseudo-filigranes.

Dans le cas où la structure 20 porte deux couches fibreuses de part et d'autre de la couche diffusante, l'une des couches peut comporter un filigrane et l'autre un pseudo-filigrane, ou les deux couches peuvent comporter chacune un filigrane ou chacune un pseudo-filigrane.

### Matrice polymérique

La matrice polymérique peut être thermoplastique ou non. La matrice polymérique peut notamment être apte à être déposée par un traitement de surface, par exemple surfaçage, sur une couche de papier de préférence revêtue d'une couche d'homogénéisation de sa surface ou sur une couche de support thermoplastique. Lors de sa dépose, la matrice peut avoir été diluée avec un solvant de façon à faciliter la dispersion des particules diffusantes.

On utilise un polymère ou un mélange de polymères. La matrice est de préférence transparente. De préférence encore, la matrice est transparente et thermoscellable. L'indice de réfraction de la matrice n_{matrice} est de préférence compris entre 1,48 et 1,52, étant par exemple égal à 1,50. L'indice de réfraction de la matrice peut être supérieur à celui des particules diffusantes, ou inférieur.

De préférence, la matrice présente une faible anisotropie de son indice de réfraction, étant de préférence un milieu optiquement isotrope.

La matrice polymérique peut comporter un polymère acrylique, de l'alcool polyvinylique, un polymère uréthane, vinylacétate ou éthylène, entre autres polymères possibles.

La matrice peut être pourvue de cavités microscopiques venues d'étirage ou liées à la présence de bulles d'un gaz par exemple ce qui participe à l'effet diffusant. Les bulles de gaz sont de préférence de diamètre inférieur ou égal à 30 µm. Le gaz peut être de l'oxygène, de l'azote, de l'air ou un mélange de ceux ci.

L'indice de réfraction du gaz, n_{gaz} est de préférence comprise entre 0,95 et 1,05.

### Particules diffusantes

Les particules peuvent être de toutes formes et notamment présenter une forme aléatoire, sensiblement sphérique, plaquettaire ou aciculaire, étant pleines ou creuses. Les particules peuvent être des fibres.

Les particules peuvent être monomatière ou multimatériau, et notamment présenter une structure composite avec par exemple des inclusions d'un second matériau au sein d'un premier matériau ou une écorce ou gaine d'un second matériau recouvrant un coeur constitué d'un premier matériau, l'un et/ou l'autre de ces matériaux pouvant être biréfringent ou non.

Les particules diffusantes sont de préférence dispersées de façon homogène dans la matrice. Les particules diffusantes sont ainsi, de préférence, non agrégées au sein de la matrice.

L'indice de réfraction des particules diffusantes est différent (inférieur ou supérieur) d'au moins 0,01, mieux d'au moins 0,03, de l'indice de réfraction de la matrice, de préférence différent de 0,1 à 1.

L'indice de réfraction des particules diffusantes est de préférence inférieur à 3,00, car un indice élevé a tendance à conférer aux particules une opacité et/ou une coloration qui nuit à la visibilité du filigrane ou pseudo-filigrane d'un seul côté de la structure.

Les particules diffusantes peuvent être constituées de matériaux organiques ou inorganiques, étant de préférence inorganiques.

Lorsque les particules sont inorganiques, elles comportent ou sont constituées par exemple d'aluminium, magnésium, calcium, antimoine, silicium, titane, zirconium, barium, zinc, notamment leurs oxydes et sulfures tels que la silice, l'oxyde de zinc, l'oxyde d'antimoine, et leurs mélanges. SiO₂ convient tout particulièrement sou sa forme poreuse ou non poreuse.

Les particules inorganiques sont de préférence choisies parmi les oxydes métalliques incolores, notamment parmi TiO₂, SiO₂, Al₂O₃, AlOOH et leurs mélanges.

Lorsque les particules sont organiques, elles comportent ou sont constituées par exemple de polystyrène, poly(acrylates), poly(alkyl méthacrylates), notamment PMMA, PTFE, silicones, par exemple poly(alkyl trialkoxysilanes) hydrolysées, polyméthyl sisesquioxane, et les mélanges comportant l'un au moins de ces composés, dans lesquels les groupes alkyl ont entre un et douze atomes de carbone.

Les particules peuvent être composites et par exemple comporter un coeur, notamment minéral, et une écorce, notamment organique, comme illustré à la figure 8A, ou comporter des inclusions, comme illustré à la figure 8B. A titre d'exemples de particules comportant des inclusions, on peut citer celles comportant des nanoparticules de TiO₂ (n=2,5) noyées dans une matrice de SiO₂ (n=1,47).

Les particules peuvent encore être des fibres comportant un coeur et une gaine en des matériaux différents.

La structure peut comporter des particules biréfringentes ayant deux indices de réfraction dont chacun est différent de celui de la matrice polymérique, avec une différence d'indice en valeur absolue avec la matrice supérieure ou égale à 0,01, mieux 0,03, encore mieux 0,1.

Les particules diffusantes peuvent être réalisées avec un matériau à effet biréfringent uniaxe. La valeur absolue de biréfringence (Δn), définie comme étant la différence entre l'indice de réfraction extraordinaire et l'indice de réfraction ordinaire, peut être comprise entre 0,01 et 0,7, de préférence entre 0,2 et 0,3.

On peut réaliser les particules diffusantes à effet biréfringent dans un matériau inorganique (sel, oxyde métallique...), de préférence un sel, de préférence NaNO₃. On peut avoir Δn > 0 ou Δn < 0 De préférence Δn < 0.

On utilise avantageusement des particules ayant une double biréfringence, comportant un coeur d'un premier matériau biréfringent entouré d'une écorce ou gaine d'un deuxième matériau biréfringent, d'indice de biréfringence différent de celui du premier matériau, ou comportant des inclusions d'un premier matériau biréfringent noyées dans une matrice d'un deuxième matériau biréfringent, d'indice de biréfringence différent de celui du premier matériau.

La couche de diffusion peut aussi comporter un mélange de particules diffusantes de différentes natures, notamment au moins deux sortes de particules diffusantes dont chacune vérifie la relation |n_{matrice}-n_{particules}| ≥ 0,01, mieux 0,03, encore mieux 0,1.

Des mélanges de particules préférés sont à base de particules ayant une différence d'indice de réfraction entre les particules en mélange qui soit supérieure à 0,01 et de préférence supérieure à 0,03, mieux à 0,1

Des particules diffusantes creuses améliorent la diffusion. Les particules creuses peuvent présenter un volume poreux compris entre 0,1 et 2,0 mL/g, les valeurs étant déterminées par mesure BET (Brunauer Emmett Teller) par adsorption d'azote.

Les particules creuses peuvent être réalisées comme décrit dans la demande de brevet FR 2 950542.

De préférence, on utilise des particules sphériques, et de préférence encore des particules non agrégées, c'est-à-dire dont la distribution au sein de la matrice polymérique liante est homogène.

La taille des particules diffusantes est de préférence micrométrique, et l'on utilise de préférence une répartition granulométrique large (i.e. avec des tailles de particules comprises entre 50 nm et par exemple 5 microns, une importante variation des tailles de particules dans cette gamme favorisant l'effet diffusant) de particules de taille micrométrique. Les particules les plus grosses diffusent les rayons lumineux et les plus petites les diffractent. Cet effet coopératif permet d'améliorer l'effet diffusant de l'ensemble. L'indice de polydispersité est compris entre 0,08 et 0,7 pour une analyse granulométrique de particules selon la norme ISO 13321:1996.

La taille maximale (en nombre) est de préférence inférieure à 5 micromètres.

La taille moyenne (en nombre) des particules diffusantes est par exemple comprise entre 1 et 5 µm. Mieux, la taille moyenne des particules est comprise entre 1 et 2 micromètres, notamment pour une application billet de banque avec une épaisseur de l'ordre de 15 microns de la couche diffusante.

L'épaisseur de la couche diffusante est de préférence comprise entre 5 et 50 µm, et de préférence encore entre 10 et 30 microns. Cette épaisseur est adaptée à l'intégration dans les documents de sécurité fins tels que les billets de banque. Une configuration dans laquelle la structure présente une couche diffusante d'épaisseur e_{d}, par exemple de 15 µm, permet d'obtenir des caractéristique de diffusion plus satisfaisantes qu'une structure comprenant deux couches diffusantes de e_{d}/2 d'épaisseur, disposées de chaque côté d'une couche de support, par exemple en PET de 6 microns d'épaisseur.

L'effet dit « Dual Watermark » est plus marqué lorsque la couche diffusante se trouve disposée du côté où la lumière pénètre, comme sur la figure 2.

La structure comporte de préférence entre 20 et 70 %, mieux entre 50 et 60%, en masse (matière sèche) de particules diffusantes par rapport au poids total matrice polymérique et particules diffusantes.

### Exemples de procédés de fabrication

On va donner dans ce qui suit quelques exemples non limitatifs de procédés de fabrication. La structure selon l'invention peut encore être réalisée autrement.

Dans un exemple de mise en oeuvre de l'invention, la structure selon l'invention est fabriquée en ligne.

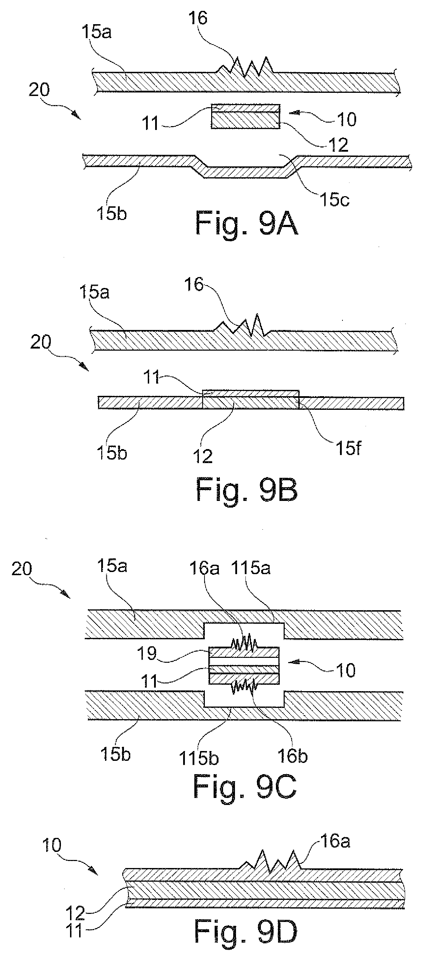

Par exemple, comme illustré à la figure 9A, un premier jet de papier 15a est réalisé, par exemple avec une machine à forme ronde, étant porteur d'un filigrane 16. Un deuxième jet de papier 15b est fabriqué, par exemple avec un cylindre dit « short former ». Une sous-structure diffusante 10, en bande, est insérée en ligne entre les deux jets, de façon à se superposer avec le filigrane 16 et un renfoncement 15e formé dans le jet 15b lors de l'assemblage des jets en phase humide.

Dans un autre exemple, illustré à la figure 9B, le premier jet 15a est réalisé comme ci-dessus et le deuxième 15b est réalisé avec un évidement comme décrit dans la demande FR 2 935 995. Cet évidement, qui peut être traversant, comme illustré, accueille une sous-structure diffusante 10 en bande, puis les jets 15a et 15b sont assemblés en phase humide.

Dans les deux cas, la sous-structure diffusante 10 est par exemple composée d'une couche de support 12 d'une matière thermoplastique telle que du PET, revêtue sur une face d'une couche diffusante 11 selon l'invention.

L'introduction de la sous-structure 10 entre les jets peut s'effectuer en ligne, comme décrit dans la demande FR 2 929 062.

Dans un autre exemple de procédé de fabrication de la structure, celle-ci est fabriquée avec introduction en ligne entre deux jets de papier de la sous-structure, la sous-structure étant par exemple fabriquée hors ligne.

Par exemple, on introduit entre deux jets de papier 15a et 15b, qui peuvent être non filigranés, une sous-structure 10 en bande filigranée.

Le premier jet 15a est par exemple réalisé sur une forme ronde et le deuxième sur un cylindre «short former ». La sous-structure 10 se loge entre des zones amincies 115a et 115b formées dans les premier et deuxième jets (15a, 15b) notamment par l'introduction de ladite sous-structure en phase humide.

La sous-structure 10, en bande, filigranée, comporte par exemple deux jets de papier filigranés, et une couche diffusante 11 qui est surfacée sur l'un des jets, sur la face de ce jet en regard de l'autre jet, et contrecollée sur l'autre jet.

De préférence, comme illustré, on dépose par surfaçage sur la couche filigranée une couche de matrice transparente, par exemple acrylique et par exemple d'environ 10 microns d'épaisseur, pour homogénéiser la surface du papier, puis on dépose sur cette couche transparente la couche diffusante selon l'invention. A titre d'exemple, les épaisseurs des deux jets filigranés 16a et 16b de la sous-structure 10 sont par exemple de 30 microns et l'épaisseur de la couche diffusante 11 va de 10 à 20 microns ; les jets fibreux 15a et 15b entre lesquels la sous-structure est introduite font par exemple environ 10 microns d'épaisseur dans les zones amincies 115a et 115b où ils se superposent à la sous-structure 10, de telle sorte que l'ensemble fait par exemple environ 100 microns d'épaisseur.

Dans une variante, la sous-structure 10 de l'exemple de la figure 9C est remplacée par une sous-structure illustré à la figure 9D, comportant un support 12 en matière thermoplastique, notamment du PET, par exemple de 30 à 40 microns d'épaisseur, recouvert sur une face de la couche diffusante 11 selon l'invention et accolé par l'autre face à un jet de papier filigrané 16a, par exemple de 30 microns environ d'épaisseur.

Dans une autre variante non illustrée, la sous-stucture 10 comporte un jet de papier filigrané recouvert sur une face d'une matrice transparente déposée par surfaçage, ce qui homogénéise la surface du papier, la couche diffusante 11 étant déposée sur cette matrice transparente.

### EXEMPLES

### Exemple 1

On réalise la structure de la figure 2.

On utilise comme couche fibreuse 15 un substrat fibreux, par exemple cellulosique ou cellulosique et synthétique, filigrané de bas grammage, notamment entre 20 et 80g/m², de préférence 30g/m², d'épaisseur comprise entre 20 et 80 microns, et de préférence égale à 30 microns.

On utilise comme couche de support 12 un film PET transparent de 6 à 12µm d'épaisseur, de préférence d'épaisseur égale à 6 µm.

On couche sur la couche de support une solution comprenant une dispersion aqueuse polymérique liante (matrice transparente) et les particules diffusantes pour former la couche diffusante 11. En variante, le couchage de cette solution a lieu directement sur le substrat fibreux filigrané, mais l'on perd en homogénéité de diffusion.

On utilise comme particules diffusantes du ZnO d'indice de réfraction égal à 2,1 à une concentration massique sèche de 50% par rapport à la masse totale sèche. La matrice en polymère acrylique est d'indice de réfraction 1,50. La taille des particules est de 0,8 µm, provenant par exemple de la société PYLOTE et réalisées comme décrit dans la demande de brevet FR2 950 542.

### Exemple 2

On réalise la couche diffusante en mélangeant les particules diffusantes de l'exemple 1 à une matrice polymérique thermoplastique, par exemple du PET, qui est extrudée. Dans une telle réalisation, deux couches thermoscellantes, par exemple de 1 micron d'épaisseur, constituées de NOLAX S35.3079 ou de NOLAX S35.3074 sont appliquées de chaque côté de la couche diffusante, et la sous-structure ainsi constituée est laminée avec une ou deux couches filigranées de sorte à former un document de sécurité ou une structure destiné à être intégrée dans un document de sécurité.

### Exemple 3

On réalise une bande porteuse bi-jet telle qu'illustrée à la figure 5 et observée en coupe à la figure 7, réalisée par association de deux jets 15a et 15b de papier, de couleurs identiques ou différentes, chaque jet portant un filigrane 16a ou 16b.

Les filigranes réalisés sur les jets peuvent être décalés les uns des autres ou bien superposés lors de l'association, qui se fait préférentiellement par contre-collage.

La couche adhésive qui marie les deux jets est une colle dont la composition lui permet de jouer également le rôle de couche diffusante 11 et d'obtenir une forte diffusion de la lumière. Cette couche comporte par exemple comme adhésif un polymère tel que NOLAX S35.3079 ou NOLAX S35.3074 avec des particules diffusantes de Si0₂ (n=1,47) incluant des nanoparticules de TiO₂ (n=2,5).

En variante, on dispose entre les deux jets une structure comportant une couche diffusante formée par extrusion.

Lorsque la bande est intégrée à un substrat fibreux, comme illustré aux figures 6A et 6B, et que le substrat comporte un filigrane 37, on peut observer les filigranes par paires des côtés recto et verso.

### Essais comparatifs

On réalise une structure comportant deux jets de papier filigrané de bas grammage (environ 60 à 70 microns d'épaisseur), disposées de part et d'autre d'un support en PET de 12 microns d'épaisseur, revêtu d'une couche diffusante selon l'invention, telle que l'épaisseur totale de cette couche avec celle de la couche de PET fasse environ 50 microns. L'épaisseur totale du complexe ainsi formé va de 170 à 190 microns.

Divers types de particules sont essayés et l'on a noté la visibilité de chaque filigrane vu de sa propre face et de la face opposée.

Des résultats particulièrement satisfaisants sont obtenus avec des particules de nitrate de sodium, biréfringent (indices de réfraction de 1,58 et 1,33) et avec des particules de SiO₂. Pour ces particules, il n'a pas été constaté de jaunissement du papier et le filigrane n'est pas ou peu observable du côté opposé.

De plus, il a pu être constaté que l'effet Dual watermark est d'autant plus prononcé que le film de PET est épais. Une épaisseur de 12 microns donne un bon compromis entre l'épaisseur et l'efficacité.

Il a également été constaté que l'effet est plus marqué lorsque les particules sont déposées sur une face du film PET plutôt que sur les deux faces.

Dans les essais, la matrice est adhésive (par exemple NOLAX S35.3079) ou non (par exemple VINAMUL 3479). Une dilution préalable de la résine (à 25 % es) est préférable afin de faciliter la dispersion des particules. La teneur en particules est de 60 % en poids sec au maximum dans ces essais. Le diamètre des particules SiO2 TiO2 est de 5 microns, leur indice de réfraction de 1,8 et le diamètre des particules de silice SiO2 de 3 microns et leur indice de 1,47. On obtient de meilleurs résultats avec les particules de SiO2 qu'avec les particules SiO2 qui sont poreuses, les dimensions et la taille étant identiques par ailleurs.

L'invention n'est pas limitée aux exemples de réalisation décrits.

Par exemple, dans tous les exemples, la couche diffusante peut comporter une ouverture, de sorte qu'une partie seulement du filigrane ne soit visible que d'un côté alors que la partie complémentaire est visible de manière classique des deux côtés.

L'expression « comportant un » est synonyme de « comportant au moins un » et « compris entre » doit se comprendre bornes incluses.

## Revendications

1. Structure multicouche (20), notamment destinée à être intégrée à un document de sécurité, comportant :
- au moins un filigrane (16) ou pseudo-filigrane,
- au moins une couche diffusante (11), celle-ci étant au moins partiellement superposée au filigrane ou pseudo-filigrane, la couche diffusante comportant une matrice polymérique ayant un indice de réfraction n_{matrice}, et des particules diffusantes liées par la matrice, d'indice de réfraction n_{particules} différent de celui de la matrice, avec un écart |n_{matrice}-n_{particules}| supérieur ou égal à 0,01, mieux à 0,03, l'indice de polydispersité des particules diffusantes étant compris entre 0,08 et 0,7.

2. Structure selon la revendication 1, l'écart |n_{matrice}-n_{particules}| étant supérieur ou égal à 0,03, avec de préférence 0,03 ≤ |n_{matrice} - n_{particules}| ≤ 1,00, mieux 0,10 < |n_{matrice} - n_{particules}| ≤ 1,00.

3. Structure selon la revendication1 ou 2, les particules diffusantes comportant, voire étant constituées par, un matériau biréfringent, notamment de biréfringence uniaxiale, l'indice de biréfringence étant de préférence compris entre 0,01 et 0,7, mieux 0,2 et 0,3.

4. Structure selon l'une quelconque des revendications 1 à 3, la matrice polymérique comportant des bulles de gaz d'un diamètre inférieur ou égal à 30 µm ayant un indice de réfraction n_{gaz} différent de celui de la matrice polymérique et/ou des particules diffusantes avec des écarts |n_{gaz} - n_{particules}| et/ou |n_{gaz} - n_{matrice}| supérieurs ou égaux à 0,01, mieux à 0,03.

5. Structure selon l'une quelconque des revendications 1 à 4, comportant des particules biréfringentes ayant deux indices de réfraction dont chacun est différent de celui de la matrice polymérique, avec une différence de chaque indice avec la matrice, en valeur absolue, supérieure ou égale à 0,01, mieux à 0,03, encore mieux 0,1.

6. Structure selon l'une quelconque des revendications 1 à 5, comportant une couche de support (12), de préférence transparente, adjacente à la couche diffusante (11), la couche de support (12) étant de préférence d'épaisseur comprise entre 10 et 15 microns, la couche diffusante (11) et/ou la couche de support (12) étant notamment thermoscellante.

7. Structure selon la revendication 6, la couche de support (12) ayant un indice de réfraction différent d'un indice de réfraction moyen de la couche diffusante (11), avec une différence supérieure ou égale, en valeur absolue, à 0,01, mieux à 0,03, encore mieux à 0,1.

8. Structure selon l'une quelconque des revendications précédentes, la couche diffusante (11) étant disposée entre deux couches de papier (15a et 15b), dont l'une au moins comporte un filigrane, mieux chacune comporte un filigrane (16a et 16b), la couche diffusante (11) étant de préférence au contact d'un support (12), notamment un film de matière thermoplastique, notamment de PET, de préférence transparent, la couche de papier (15b) opposée à celle portant le filigrane étant de préférence munie d'un renfoncement (15 e) ou d'un évidement (15f), ce renfoncement ou cet évidement recevant au moins partiellement le support (12) et/ou la couche diffusante (11).

9. Structure selon l'une quelconque des revendications précédentes, la couche diffusante (11) étant disposée entre deux couches externes (15a, 15b) de papier, notamment deux couches de papier non filigranées, la couche diffusante appartenant à une sous-structure (10) comportant deux couches fibreuses filigranées (16a, 16b), l'une au moins de ces couches fibreuses étant de préférence enduite d'une matrice transparente permettant d'homogénéiser la surface du papier, la couche diffusante (11) étant disposée au contact de cette matrice transparente, les couches externes présentant de préférence au moins une zone amincie accueillant au moins partiellement la sous-structure, mieux chacune une telle zone amincie (115a, 115b).

10. Structure selon l'une quelconque des revendications précédentes, les particules diffusantes étant composites, comportant des inclusions d'un second matériau au sein d'un premier matériau ou une écorce ou gaine d'un second matériau recouvrant un coeur constitué d'un premier matériau, l'un et/ou l'autre de ces matériaux étant de préférence biréfringent.

11. Procédé de fabrication d'une structure multicouche selon l'une quelconque des revendications précédentes, dans lequel :
un premier jet de papier (15a) est réalisé, notamment avec une machine à forme ronde, étant porteur d'un filigrane (16), un deuxième jet de papier (15b) est fabriqué, notamment avec un cylindre dit « short former », une sous-structure diffusante (10), en bande, est insérée entre les deux jets (15a,15b), de façon à se superposer avec un renfoncement (15e) formé dans un jet et le filigrane (16) formé dans l'autre jet, puis les jets sont assemblés en phase humide, la sous-structure diffusante (10) étant de préférence composée d'une couche de support (12) d'une matière thermoplastique, notamment du PET, revêtue de la couche diffusante (11), la sous-structure (10) étant de préférence introduite en ligne entre les deux jets de papier.

12. Procédé de fabrication d'une structure multicouche selon l'une quelconque des revendications 1 à 10, dans lequel : un premier jet de papier (15a) est réalisé, notamment avec une machine à forme ronde, étant porteur d'un filigrane (16), un deuxième jet de papier (15b) est réalisé avec un évidement, de préférence traversant, qui accueille une sous-structure diffusante (10) en bande, puis les jets (15a) et (15b) sont assemblés en phase humide, la sous-structure diffusante (10) étant de préférence composée d'une couche de support (12) d'une matière thermoplastique, notamment du PET, revêtue de la couche diffusante (11), la sous-structure (10) étant de préférence introduite en ligne entre les deux jets de papier.

13. Procédé de fabrication d'une structure multicouche selon l'une quelconque des revendications 1 à 10, dans lequel : on introduit entre deux jets de papier (15a, 15b), qui peuvent être non filigranés, une sous-structure (10) en bande, filigranée, le premier et (15a) étant réalisé, de préférence sur une forme ronde et le deuxième étant réalisé, de préférence sur un cylindre « short former », la sous-structure (10) se logeant entre des zones amincies (115a, 115b) formées dans les premier et deuxième jets (15a, 15b) notamment par l'introduction de ladite sous-structure, la sous-structure (10) comportant de préférence deux jets de papier filigranés et la couche diffusante (11), laquelle est de préférence surfacée sur l'un des jets (16a), sur la face de ce jet en regard de l'autre jet, et contrecollée sur l'autre jet (16b), et dans lequel également, de préférence, avant de déposer la couche diffusante (11) sur le jet filigrané (16a), on dépose, notamment par surfaçage, sur ce jet filigrané (16a) une couche (19) de matrice transparente, notamment acrylique et de préférence d'environ 10 microns d'épaisseur, pour homogénéiser la surface du papier, la couche diffusante (11) étant déposée sur cette couche transparente, les épaisseurs des deux jets filigranés (16a, 16b) étant de préférence d'environ 30 microns et l'épaisseur de la couche diffusante (11) étant de préférence comprise entre 10 et 20 microns, les jets fibreux (15a, 15b) entre lesquels la sous-structure est introduite étant de préférence d'environ 10 microns d'épaisseur dans les zones amincies (115a, 115b) où ils se superposent à la sous-structure (10)

14. Procédé de fabrication d'une structure multicouche selon l'une quelconque des revendications 1 à 10, dans lequel : on introduit entre deux jets de papier (15a, 15b), qui peuvent être non filigranés, une sous-structure (10) en bande, filigranée, le premier jet (15a) étant réalisé, de préférence sur une forme ronde et le deuxième étant réalisé, de préférence sur un cylindre « short former », la sous-structure (10) se logeant entre des zones amincies (115a, 115b) formées dans les premier et deuxième jets (15a, 15b) notamment par l'introduction de ladite sous-structure, la sous-structure (10) comportant un support (12) en matière thermoplastique, notamment du PET, de préférence d'épaisseur inférieure ou égale à 25 microns, recouvert sur une face de la couche diffusante (11) et accolé par l'autre face à un jet de papier filigrané (16a), de préférence de 30 microns environ d'épaisseur, ou la sous-structure (10) comportant un jet de papier filigrané recouvert sur une face d'une matrice transparente déposée par surfaçage et la couche diffusante (11) étant déposée sur cette matrice transparente.

15. Article de sécurité (30) comportant une structure multicouche telle que définie dans l'une quelconque des revendications 1 à 10, constituant de préférence un document de sécurité, notamment un billet de banque, une carte d'identité, un passeport, un bon d'achat, un chèque, un voucher, une carte de crédit, un ticket d'accès à des manifestations culturelles ou sportives, ou un certificat d'authenticité, la structure multicouche s'étendant de préférence en bande d'un bord (31) à l'autre (32) du document, le document comportant éventuellement un filigrane (37) ou pseudo-filigrane non superposé à ladite bande et visible en lumière transmise du côté recto ou verso.

## Patentansprüche

1. Mehrschichtstruktur (20), insbesondere zur Integration in ein Sicherheitsdokument, umfassend:
- zumindest ein Wasserzeichen (16) oder Pseudo-Wasserzeichen,
- zumindest eine Diffusionsschicht (11), wobei diese zumindest teilweise das Wasserzeichen oder Pseudo-Wasserzeichen überlagert, wobei die Diffusionsschicht eine Polymermatrix enthält, die einen Brechungsindex n_{matrice} hat und diffundierende Teilchen, die durch die Matrix gebunden sind und einen Brechungsindex n_{particules} haben, der sich von demjenigen der Matrix unterscheidet, umfasst, mit einem Abstand |n_{matrice} - n_{particules}| von mindestens 0,01, vorzugsweise mindestens 0,03, wobei der Polydispersitätsindex der diffundierenden Teilchen zwischen 0,08 und 0,7 liegt.

2. Struktur nach Anspruch 1, wobei der Abstand |n_{matrice} - n_{particules}| größer oder gleich 0,3 ist, wobei vorzugsweise 0,03 ≤ |n_{matrice} - n_{particules}| ≤ 1,00, insbesondere bevorzugt 0,10 < |n_{matrice} - n_{particules}| ≤ 1,00.

3. Struktur nach Anspruch 1 oder 2, wobei die diffundierenden Teilchen enthalten oder gebildet sind durch ein doppelbrechendes Material, insbesondere mit uniaxialer Doppelbrechung, wobei der Doppelbrechungsindex vorzugsweise zwischen 0,01 und 0,7 liegt, weiter bevorzugt zwischen 0,2 und 0,3.

4. Struktur nach einem der Ansprüche 1 bis 3, wobei die Polymermatrix Gasbläschen mit einem Durchmesser von 30 µm oder weniger enthält, die einen Brechungsindex n_{gaz} haben, der sich von demjenigen der Polymermatrix und/oder den diffundierenden Teilchen mit Abständen |n_{matrice} - n_{particules}| und/oder |n_{gaz} - n_{particules}| von 0,01 oder mehr unterscheidet, insbesondere mindestens 0,03.

5. Struktur nach einem der Ansprüche 1 bis 4, umfassend doppelbrechende Teilchen mit zwei Brechungsindizes, von denen sich jeder von demjenigen der Polymermatrix unterscheidet, mit einer Differenz jedes Brechungsindex zu der Matrix, die im Betrag 0,01 oder mehr, vorzugsweise mindestens 0,03 oder weiter bevorzugt mindestens 0,1 beträgt.

6. Struktur nach einem der Ansprüche 1 bis 5, umfassend eine vorzugsweise transparente Trägerschicht (12) neben der Diffusionsschicht (11), wobei die Trägerschicht (12) vorzugsweise eine Dicke zwischen 10 und 15 µm hat und die Diffusionsschicht (11) und/oder die Trägerschicht (12) insbesondere heißverklebbar sind.

7. Struktur nach Anspruch 6, wobei die Trägerschicht (12) einen Brechungsindex aufweist, der sich von einem mittleren Brechungsindex der Diffusionsschicht (11) unterscheidet, wobei ein Unterschied im Betrag 0,01 oder mehr beträgt, bevorzugt mindestens 0,03 oder weiter bevorzugt mindestens 0,1.

8. Struktur nach einem der vorhergehenden Ansprüche, wobei die Diffusionsschicht (11) zwischen zwei Papierschichten (15a und 15b) angeordnet ist, von denen zumindest eine ein Wasserzeichen enthält, vorzugsweise jede ein Wasserzeichen (16a und 16b) enthält, wobei die Diffusionsschicht (11) vorzugsweise in Kontakt mit einem Träger (12) steht, insbesondere einem Film aus einem thermoplastischen Material, insbesondere PET, vorzugsweise transparent, wobei die dieser gegenüberliegende Papierschicht (15b) das Wasserzeichen trägt und vorzugsweise mit einer Verstärkung (15e) oder einer Ausnehmung (15f) versehen ist, wobei diese Verstärkung oder diese Ausnehmung zumindest teilweise den Träger (12) und/oder die Diffusionsschicht (11) aufnimmt.

9. Struktur nach einem der vorhergehenden Ansprüche, wobei die Diffusionsschicht (11) zwischen zwei externen Schichten (15a, 15b) aus Papier angeordnet ist, insbesondere zwei Papierschichten ohne Wasserzeichen, wobei die Diffusionsschicht zu einer Unterstruktur (10) gehört, die zwei faserige Schichten mit Wasserzeichen (16a, 16b) enthält, wobei zumindest eine dieser Faserschichten mit einer transparenten Matrix überzogen ist, die eine Homogenisierung der Papieroberfläche ermöglicht, und die Diffusionsschicht (11) in Kontakt mit dieser transparenten Matrix angeordnet ist und die äußeren Schichten vorzugsweise zumindest eine dünnere Zone zeigen, die zumindest teilweise die Unterstruktur aufnehmen, vorzugsweise jede eine solche dünnere Zone (115a, 115b) hat.

10. Struktur nach einem der vorhergehenden Ansprüche, wobei die diffundierenden Teilchen Verbundteilchen sind, die Einschlüsse aus einem zweiten Material innerhalb eines ersten Materials oder eine Schale oder Hülle aus einem zweiten Material haben, welche einen aus einem ersten Material gebildeten Kern bedeckt, wobei das eine und/oder das andere dieser Materialien vorzugsweise doppelbrechend ist.

11. Verfahren zur Herstellung einer mehrschichtigen Struktur nach einem der vorhergehenden Ansprüche, wobei:
eine erste Lage aus Papier (15a) realisiert wird, insbesondere mit einer Maschine mit runder Form, welche ein Wasserzeichen (16) trägt, eine zweite Lage aus Papier (15b) hergestellt wird, insbesondere mit einem als "short former" bekannten Zylinder, eine diffundierende Unterstruktur (10) als Band zwischen die beiden Lagen (15a, 15b) eingesetzt wird, sodass sie mit einer Verstärkung (15e), die in einer Lage ausgebildet ist, und dem Wasserzeichen (16), welches in der anderen Lage ausgebildet ist, zur Überlagerung kommt, und dann die Lagen in einer Nassphase zusammengesetzt werden, wobei die diffundierende Unterstruktur (10) vorzugsweise zusammengesetzt ist aus einer Trägerschicht (12) aus einem thermoplastischen Material, insbesondere PET, die mit der diffundierenden Schicht (11) bedeckt ist, wobei die Unterstruktur (10) vorzugsweise in der Produktionslinie zwischen die beiden Papierlagen eingebracht wird.

12. Verfahren zur Herstellung einer Mehrschichtstruktur nach einem der Ansprüche 1 bis 10, wobei: eine erste Lage aus Papier (15a) hergestellt wird, insbesondere mit einer Maschine mit runder Form, welche ein Wasserzeichen (16) trägt, eine zweite Lage aus Papier (15b) mit einer vorzugsweise durchgehenden Ausnehmung realisiert wird, welche eine diffundierende Unterstruktur (10) als Band aufnimmt, wobei dann die Lagen (15a) und (15b) in einer Nassphase zusammengesetzt werden und die diffundierende Unterstruktur (10) vorzugsweise aus einer Trägerschicht (12) aus einem thermoplastischen Material, insbesondere aus PET, die mit der diffundierenden Schicht (11) bedeckt ist, aufgebaut ist, wobei die Unterstruktur (10) vorzugsweise in einer Produktionslinie zwischen die beiden Papierlagen eingebracht ist.

13. Verfahren zur Herstellung einer Mehrschichtstruktur nach einem der Ansprüche 1 bis 10, wobei: eine mit Wasserzeichen versehene, bandförmige Unterstruktur (10) zwischen zwei Lagen aus Papier (15a, 15b), die ohne Wasserzeichen sein können, eingebracht wird, wobei die erste Lage (15a) vorzugsweise auf einer runden Form realisiert ist und die zweite vorzugsweise auf einem als "short former" bekannten Zylinder realisiert ist, die Unterstruktur (10) zwischen dünneren Zonen (115a, 115b) liegt, die in der ersten und zweiten Lage (15a, 15b) ausgebildet sind, insbesondere durch das Einfügen dieser Unterstruktur, wobei die Unterstruktur (10) vorzugsweise zwei mit Wasserzeichen ausgestattete Lagen aus Papier und die diffundierende Schicht (11) umfasst, welche vorzugsweise in die Oberfläche einer der Lagen (16a) eingebettet ist, und zwar in der der anderen Lage gegenüberliegenden Seite, und auf die Lage (16b) aufgeklebt ist, wobei ferner vorzugsweise vor dem Aufbringen der diffundierenden Schicht (11) auf die mit Wasserzeichen ausgestattete Lage (16a) insbesondere durch Planschleifen auf die mit Wasserzeichen ausgestattete Lage (16a) eine Schicht (19) aus transparentem Matrixmaterial, insbesondere Acryl und vorzugsweise mit ungefähr 10 Mikrometern Dicke, aufgebracht wird, um die Oberfläche des Papiers zu homogenisieren, wobei die Diffusionsschicht (11) auf dieser transparenten Schicht angeordnet ist und die Dicken der beiden mit Wasserzeichen ausgestatteten Lagen (16a, 16b) vorzugsweise ungefähr 30 Mikrometer betragen und die Dicke der Diffusionsschicht (11) vorzugsweise zwischen 10 und 20 Mikrometern beträgt, wobei die faserigen Lagen (15a, 15b), zwischen welchen die Unterstruktur eingefügt ist, vorzugsweise in den dünneren Zonen (115a, 115b), in welchen sie in der Unterstruktur (10) überlagert sind, eine Dicke von ungefähr 10 Mikrometern haben.

14. Verfahren zur Herstellung einer Mehrschichtstruktur nach einem der Ansprüche 1 bis 10, wobei: eine bandförmige, mit Wasserzeichen ausgestattete Unterstruktur (10) zwischen zwei Lagen aus Papier (15a, 15b), die nicht mit Wasserzeichen ausgestattet sein müssen, eingeführt wird, wobei die erste Lage (15a) vorzugsweise auf einer runden Form realisiert ist und die zweite Lage vorzugsweise auf einem "short former"-Zylinder realisiert ist, die Unterstruktur (10) zwischen zwei dünneren Zonen (115a, 115b) liegt, die in der ersten und zweiten Lage (15a, 15b) insbesondere durch Einführen der Unterstruktur ausgebildet sind, wobei die Unterstruktur (10) einen Träger aus einem thermoplastischen Material, insbesondere aus PET enthält, vorzugsweise mit einer Dicke von 25 Mikrometer oder weniger, die auf einer Seite mit der Diffusionsschicht (11) bedeckt ist und mit der anderen Seite auf eine Lage aus Papier (16a) mit Wasserzeichen aufgeklebt ist, vorzugsweise von ungefähr 30 Mikrometern Dicke, wobei die Unterstruktur (10) eine Lage aus mit Wasserzeichen ausgestattetem Papier umfasst, die eine Seite einer transparenten Matrix bedeckt, die durch Planschleifen aufgebracht ist, und die Diffusionsschicht (11) auf dieser transparenten Matrix angeordnet ist.

15. Sicherheitsartikel (30) mit einer Mehrschichtstruktur gemäß einem der Ansprüche 1 bis 10, vorzugsweise ein Sicherheitsdokument, insbesondere eine Banknote, ein Ausweis, ein Pass, ein Einkaufsgutschein, ein Scheck, ein Gutschein, eine Kreditkarte, eine Eintrittskarte für kulturelle oder sportliche Veranstaltungen oder ein Echtheitszertifikat, wobei sich die Mehrschichtstruktur vorzugsweise bandförmig von einem Rand (31) bis zum anderen (32) des Dokuments erstreckt, wobei das Dokument eventuell ein Wasserzeichen (37) oder ein Pseudo-Wasserzeichen enthält, welches nicht mit dem Band überlagert ist und in von vorne oder von hinten durchscheinendem Licht sichtbar ist.

## Claims

1. Multilayer structure (20), particularly intended to be incorporated into a security document, comprising:
- at least one watermark (16) or pseudo-watermark,
- at least one scattering layer (11), with this at least partially overlapping the watermark or pseudo-watermark, with the scattering layer comprising a polymer matrix which has a refractive index nₘₐₜᵣᵢₓ, and scattering particles being bound by the matrix, with a refractive index n_{particles} different to that of the matrix, with a disparity |nₘₐₜᵣᵢₓ - n_{particles}| greater than or equal to 0.01, or better to 0.03, with the polydispersity index of the scattering particles being comprised between 0.08 and 0.7.

2. Structure according to claim 1, with the disparity |nₘₐₜᵣᵢₓ-n_{particles}| being greater than or equal to 0.03, with preferably 0.03 ≤ |nₘₐₜᵣᵢₓ - n_{particles}| ≤ 1.00, or better 0.10 ≤ |nₘₐₜᵣᵢₓ - n_{particles}| ≤ 1.00.

3. Structure according to claim 1 or 2, with the scattering particles comprising or even being constituted by a birefringent material, particularly with uniaxial birefringence, with the birefringence index preferably being comprised between 0.01 and 0.7, or better 0.2 and 0.3.

4. Structure according to any one of claims 1 to 3, with the polymer matrix comprising gas bubbles with a diameter less than or equal to 30 µm, with a refractive index n_{gas} which is different to that of the polymeric matrix and / or the scattering particles with the disparities |n_{gas} - n_{particles}| and / or |n_{gas} - nₘₐₜᵣᵢₓ| greater than or equal to 0.01, or better to 0.03.

5. Structure according to any one of claims 1 to 4, comprising birefringent particles which have two refractive indices, each of which is different to that of the polymer matrix, with the difference of each index in relation to the matrix, in terms of absolute value, being above or equal to 0.01, or better at 0.3, even better 0.1.

6. Structure according to any one of claims 1 to 5, comprising a substrate layer (12), which is preferably transparent, adjacent to the scattering layer (11), with the substrate layer (12) preferably having a thickness comprised between 10 and 15 microns, with the scattering layer (11) and / or the substrate layer (12) being particularly heat sealable.

7. Structure according to claim 6, with the substrate layer (12) having a refractive index which is different to an average refractive index of the scattering layer (11), with a difference greater than or equal to, in terms of absolute value, of 0.01, or better of 0.03, even better of 0.1.

8. Structure according to any one of the preceding claims, with the scattering layer (11) being arranged between two paper layers (15a and 15b), of which at least one comprises a watermark, with it being better for each to comprise a watermark (16a and 16b), with the scattering layer (11) preferably being in contact with a substrate (12), particularly a film made of thermoplastic material, particularly made of PET, preferably being transparent, with the paper layer (15b) opposite to this carrying the watermark preferably being provided with a recess (15e) or hollowing (15f), with this recess or this hollowing at least partially accommodating the substrate (12) and / or the scattering layer (11).

9. Structure according to any one of the preceding claims, with the scattering layer (11) being arranged between two external layers (15a, 15b) of paper, particularly two unwatermarked paper layers, with the scattering layer belonging to a sub-structure (10) comprising two watermarked fibrous layers (16a, 16b), with at least of these fibrous layers preferably being coated with a transparent matrix which makes it possible to homogenise the surface of the paper, with the scattering layer (11) being arranged in contact with this transparent matrix, with the external layers preferably having at least one thinner zone at least partially accommodating the sub-structure, or better each one having such a thinner zone (115a, 115b).

10. Structure according to any one of the preceding claims, with the scattering particles being composites, comprising inclusions made of a second material within a first material or a shell or sheath made of a second material covering a core constituted by a first material, with one and / or the other of these materials preferably being birefringent.

11. Manufacturing method for a multilayer structure according to any one of the preceding claims, in which:
a first ply of paper (15a) is made, particularly using a cylinder machine, which has a watermark (16), a second ply of paper (15b) is made, particularly using a cylinder referred to as a "short former" cylinder, a scattering sub-structure (10), in a strip, is inserted between both of these plies (15a, 15b), so as to overlap with a recess (15e) formed in a ply and the watermark (16) formed in the other ply, then the plies are assembled at the wet stage, with the scattering sub-structure (10) preferably being composed by a substrate layer (12) made of a thermoplastic material, particularly made of PET, coated with the scattering layer (11), with the sub-structure (10) preferably being inserted online between both of these plies of paper.

12. Method for manufacturing a multilayer structure according to any one of claims 1 to 10, in which: a first ply of paper (15a) is made, particularly using a cylinder machine, which has a watermark (16), a second ply of paper (15b) is made with a recess, preferably continuous, which accommodates a scattering sub-structure (10) in a strip, then the plies (15a) and (15b) are assembled at the wet stage, with the scattering sub-structure (10) preferably being composed of a substrate layer (12) made of thermoplastic material, particularly made of PET, coated with the scattering layer (11), with the sub-structure (10) preferably being inserted online between both of the plies of paper.

13. Method for manufacturing a multilayer structure according to any one of claims 1 to 10, in which: a watermarked sub-structure (10) in a strip is inserted between two plies of paper (15a, 15b), which may be unwatermarked, with the first ply (15a) preferably being made on a cylinder and the second preferably being made on a "short former" cylinder, with the sub-structure (10) being housed between thinner zones (115a, 115b) formed in the first and second plies (15a, 15b), particularly by inserting the said sub-structure, with the sub-structure (10) preferably comprising two plies of watermarked papers and the scattering layer (11), which is preferably applied to one of the plies (16a), on the face of this ply in relation to the other ply, and laminated onto the other ply (16b), and in which likewise, preferably, prior to depositing the scattering layer (11) onto the watermarked ply (16a), a layer (19) of transparent matrix, particularly being acrylic and preferably with a thickness of approximately 10 microns is deposited, particularly by way of surface application, on this watermarked ply (16a), in order to homogenise the surface of the paper, with the scattering layer (11) being deposited onto this transparent layer, with the thickness of the two watermarked plies (16a, 16b) preferably being approximately 30 microns and the thickness of the scattering layer (11) preferably being comprised between 10 and 20 microns, with the fibrous plies (15a, 15b), between which the sub-structure is inserted, preferably having a thickness of approximately 10 microns in the thinner zones (115a, 115b) or these overlap the sub-structure (10).

14. Method for manufacturing a multilayer structure according to any one of claims 1 to 10, in which: a watermarked sub-structure (10) in a strip, is inserted between two plies of paper (15a, 15b), which may be unwatermarked, with the first ply (15a) being made, preferably on a cylinder and the second being made, preferably on a "short former" cylinder, with the sub-structure (10) being housed between thinner zones (115a, 115b) formed in the first and second plies (15a, 15b) particularly by inserting the said sub-structure, with the sub-structure (10) comprising a substrate (12) made of thermoplastic material, particularly made of PET, preferably with a thickness of less than or equal to 25 microns, covered on one face by the scattering layer (11) and laminated via the other face to a ply of watermarked paper (16a), preferably with a thickness of approximately 30 microns, or with the sub-structure (10) comprising a ply of watermarked paper covered by a transparent matrix deposited by surface application on one face and the scattering layer (11) being deposited onto this transparent matrix.

15. Security item (30) comprising a multilayer structure such as that defined in any one of claims 1 to 10, preferably constituting a security document, particularly a bank note, an identity card, a passport, a gift certificate, a cheque, a voucher, a credit card, an admission ticket to cultural or sporting events or a certificate of authenticity, with the multilayer structure preferably extending in the strip from one edge (31) to the other (32) of the document, with the document possibly comprising a watermark (37) or pseudo-watermark not overlapping the said strip and which is visible in transmitted light on the front or back side.
